# EUROPEAN PATENT SPECIFICATION

(11) **EP 1 885 948 B1**
(45) Date of publication and mention of the grant of the patent: **10.04.2013**
(21) Application number: 06748014.5
(22) Date of filing: 30.05.2006
(51) Int. Cl.: D21C 9/06, F16J 15/16

(54) **ARRANGEMENT FOR THE TREATMENT OF CELLULOSE PULP**
ANORDNUNG ZUR BEHANDLUNG VON ZELLSTOFF
DISPOSITIF DE TRAITEMENT DE PATE A PAPIER

(30) Priority: 03.06.2005 SE 0501290
(43) Date of publication of application: 13.02.2008
(73) Proprietor: Metso Paper, Inc., 00101 Helsinki (FI)
(72) Inventor: LUNDBERG, Jörgen, 856 43 Sundsvall (SE); ANDERSSON, Rickard, 864 92 Matfors (SE); BYLANDER, Johan, 852 37 Sundsvall (SE); HENRIKSSON, Magnus, 856 41 Sundsvall (SE)
(74) Representative: Jansson, Margareta Karin
(86) International application number: PCT/SE2006/050174
(87) International publication number: WO 2006/130108

(56) References cited:
- EP-A2- 1 098 032
- WO-A1-01/49481
- WO-A1-02/02204
- DE-A1- 4 131 472
- DE-A1- 19 822 521
- GB-A- 2 180 893
- SU-A1- 781 466
- SU-A1- 1 622 684
- US-A- 3 056 608
- US-A- 3 081 821
- US-A- 4 579 352

## Description

This invention relates to a washing arrangement intended for washing and dewatering cellulose pulp, comprising a seal to seal a rotary cylindrical element in the washing arrangement.

All fiber lines include some type of washing arrangement to separate the liquor from the digestion from the pulp. Later on in the process a washing equipment is provided to separate bleaching liquors after bleaching stages. There exist a plurality of different types of washing equipment operating according to different principles.

One type of washing arrangement is the drum washer where the pulp is dewatered on a rotary drum after the addition of washing liquid, which displaces the liquor remaining in the pulp web after preceding process stages, for example a digestion stage or bleaching stage. Another known washing arrangement is a washing press consisting of two counter-rotating perforated rolls. These types of washing arrangement have in common that the rotary drum or roll often is sealed at the ends from the pressure in a forming or washing zone against the surrounding atmospheric pressure. The sealing often is made by an overall end seal, which extends about the entire or greater parts of the circumference of the rotary cylindrical element, i.e. the circumference of the drum or roll. The seal often is made of a polymer material. The seal is applied to the rotary roll or drum, for example, by water pressure, air pressure or spring force and acts as a mechanical seal. The maximum overpressure in the forming or washing zone is about 1 bar, which implies that the applied contact pressure usually is about 1,5-2 bar.

At washing arrangements of the aforesaid type the diameter of the drums or rolls often is relatively great, which means that a peripheral end seal, which extends about the entire circumference of the drum or roll at least about the greater part thereof, can be up to 10 - 15 m long. In relation to the thickness and width of the seal the length is great, because the magnitude of thickness and width is about some tens of mm. The force required to hold the seal in place and to prevent co-rotation is significant. If besides the friction coefficient against the roll or drum is high, the force required to hold the seal in desired position is still greater. As a consequence of the significant force strain, the seal gradually elongates by creep to fracture. The progress often is accelerated, in that the polymer material in the seal softens by the heat and ages by chemicals present in the liquors within the washing arrangement.

Owing to the elongation of the polymer seal, problems can arise with the means, which apply the seal against the roll/drum, because its position can be disturbed. The application means can be, for example, a pressurized rubber hose, spring element or a combination thereof. When, for example, the application means is an overall rubber hose, it can be subjected to shearing and is elongated, which can imply that fracture can occur if it lands outside its groove. When the seal is not enclosed at its ends, it can at its elongation land outside its groove and get into contact with rotating machine parts or be damaged in another way. The application means can also be springing elements, which at an elongation of the seal can be displaced.

The present invention has the object to solve the aforesaid problems, and it solves the problems by a washing arrangement as defined in the claims.

By arming the polymer seal with a material, which has other properties than the polymer material of the seal; the tensile stresses arising in the seal at operation can be counteracted. The armed material preferably can be placed as a thin reinforcing element at the center of the polymer seal, seen in the thickness direction. The reinforcing element preferably is placed a bit in the seal, seen from the long sides. When the reinforcing element is placed all the way out to the side, which is intended to abut to the application means, the application means will have an inferior support surface to rest on, which can result in an inferior sealing, because the reinforcing element can damage the application means and thereby cause a worse contact of the seal against the rotary element. The arming preferably extends only partially through the width of the seal. According to one embodiment, the arming extends through half the width of the seal. The extension is to be selected so that the risk that the arming element at the wear of the contact surface of the seal will land against the rotating element is minimized. The arming element could then damage the rotating element.

The polymer material in the seal should have a low friction coefficient and good chemical resistance. The arming consists of an easily flexible material with a higher yield point than the polymer material in the seal. The arming material also should have properties such as low heat expansion coefficient, low tendency to creep, high chemical and heat resistance, low water absorption and high flexibility. Examples of such material can be thin steel band, steel wire, glass fiber or carbon fiber. The arming preferably can consist of a thin steel band of the magnitude of some mm. The steel band should not be so thick that it impedes the flexibility of the seal.

The arming element can be attached to the polymer ledge by means of a number of joints placed along the longitudinal extension of the sealing. These joints may consist, for example, of pins or screw joints.

The invention is further described in the following, with reference to the Figures.
Fig. 1 shows a portion of the washing arrangement according to the invention.
Fig. 2 shows a seal used in the washing arrangement.
Fig. 3 is a cross-section A-A of the seal in Fig. 2.
Fig. 4 is a schematic illustration of a washing arrangement according an embodiment of the invention with a seal arranged at the end of a rotary cylindrical element.

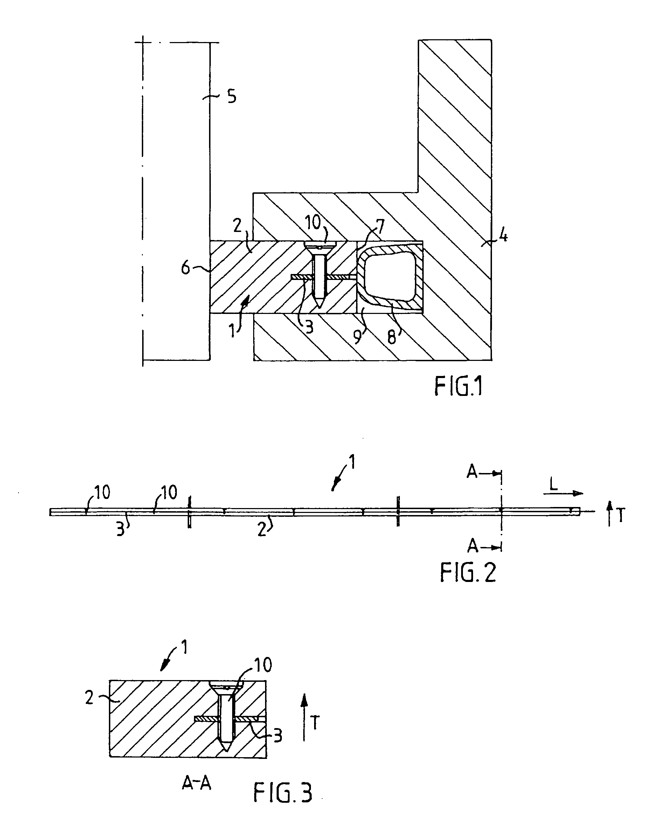

In Figure 1 is shown a sealing means in a washing arrangement according to the invention. A seal 1 consisting of a ledge 2 of a polymer material and provided with an armed element 3 is located in an end seal holder 4. The seal is located so as to abut to a drum/roll 5 in the washing arrangement, so that a first side of the seal constitutes a contact surface 6 to the drum/roll and a second side an application surface 7 located against the application means 8. The application to the drum/roll 5 is controlled via the application means 8 which, for example, can consist of a pressurized rubber hose or spring element or a combination thereof. The end seal holder is constructed with a groove 9, in which the seal 1 and the application means 8 are located. The application means preferably is not attached to the seal, but located so as to abut tightly to the same. The arming element in the form of a thin steel band is attached to the polymer ledge by a plurality of joints 10 located along the longitudinal extension of the seal. The joints suitably can consist of pins or screw joints.

A major advantage of the proposed seal is that it may be manufactured using standard components in a simple and less expensive manner than for example seals the manufacture of which involve casting processes.

Figure 2 shows a seal 1 intended to be used in the washing arrangement, extended in a longitudinal direction L, where the length of the seal corresponds to the entire or at least the greater part of the circumference of the drum or roll of the washing arrangement. At roll presses the length of the seal corresponds to less than the entire circumference of the roll. At the center of the seal, seen in a thickness direction T, an arming element 3 is provided. The arming element 3 is attached to the polymer ledge 2 of the seal by means of joints 10 placed equally spaced in the polymer ledge 2.

Figure 3 shows a seal 1 according to the invention by view of a cross-section A-A in Figure 2. The seal is formed of a polymer ledge 2, in which an arming element 3 is located approximately at the center of the seal in a thickness direction T. The arming element is attached to the polymer ledge via a number of pins 10.

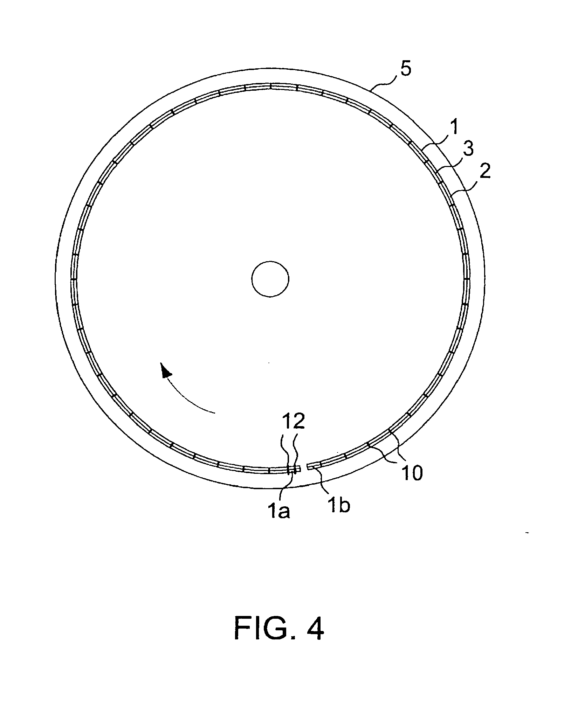

Fig. 4 is a schematic illustration of a washing arrangement according an embodiment of the invention with a seal 1 arranged to seal against the end of a rotary cylindrical element 5. The length of the seal 1 corresponds to less than the entire circumference of the roll/drum 5. In other words, the seal 1 substantially forms an "interrupted circle", enclosing less than 360°. The seal 1 can for example form a circle with a gap of in the order of 2°-6°. The seal of Fig. 4 is a polymer ledge 2 provided with a steel band forming an arming element 3 by means of which the tensile stresses arising in the seal at operation can be counteracted. The steel band is attached to the polymer ledge 2 by means of a number of joints 10 placed along the longitudinal extension of the seal 1. The seal has two ends 1 a, 1 b and is preferably fixed at one end portion 1 a, while the other end 1b is arranged to be movable in the circumferential direction (lengthwise). Seen in the direction of rotation, the fixed end 1a is the first end. The fixed seal end can be achieved by fixing the steel band (and generally also the polymer ledge since the polymer ledge normally would be about the same length as the steel band) to a member of the washing arrangement which is prevented from moving freely in the circumferential direction (i.e. prevented from giving way to the rotational force). The fixed seal end should thus be fixed in the vicinity of one of the ends of the steel band. The fixing mechanism is in Fig. 4 represented by two joints 12 protruding outside the polymer ledge and the skilled person recognizes that various fixing solutions are possible, e.g. including one or more intermediate members.

By means of the seal arrangement of Fig. 4, tensile stresses of the seal can be counteracted in an efficient manner. The seal is held in the fixed steel band end portion and tensile stresses are transferred through the steel band with its joints instead of affecting the polymer ledge. The resulting seal is flexible and resistant to tensile stresses and will thus be associated with a comparatively long life.

The invention, of course, is not restricted to the embodiments shown, but can be varied within the scope of the patent claims.

## Claims

1. A washing arrangement for washing and dewatering cellulose pulp, comprising at least one rotary cylindrical element (5), against which the pulp is dewatered, and where a seal (1) is located in an end seal holder (4), so that the seal has a contact surface (6) against the rotary cylindrical element (5) and an application surface (7) placed against application means (8) located in a groove (9) in the end seal holder (4), where the seal has a longitudinal extension, which corresponds to the entire or at least to a greater part of the circumference of the cylindrical element and is intended to seal against the end of the cylindrical element, **characterized in that** the seal is a polymer ledge (2) provided with an arming element (3) so as to counteract the tensile stresses arising in the seal at operation, the arming element (3) being a steel band attached to the polymer ledge (2) by means of a number of joints (10) placed along the longitudinal extension of the seal (1).

2. A washing arrangement as defined in claim 1, **characterized in that** the seal 1 has a first end 1 a and a second end 1b, the first end 1 a being fixed in the circumferential direction while the second end 1 b being movable in the circumferential direction.

3. A washing arrangement as defined in claim 2, **characterized in that** the seal 1 substantially forms an interrupted circle, enclosing less than 360°.

4. A washing arrangement as defined in any one of the preceding claims, **characterized in that** the arming element (3) is connected with the polymer ledge by means of pins or screw joints (10).

5. A washing arrangement as defined in any one of the preceding claims, **characterized in that** the extension of the arming element (3) in the width direction constitutes only a portion of the entire extension of the seal in the width direction.

6. A washing arrangement as defined in any one of the preceding claims, **characterized in that** the arming element (3) extends from the application surface (7) of the seal inward into the seal.

7. A washing arrangement as defined in the claims 1-5, **characterized in that** the arming element is located with its beginning a bit inward from the application surface (7).

8. A washing arrangement as defined in any one of the preceding claims, **characterized in that** the extension of the arming element (3) in the width extension is half the width of the seal.

9. A washing arrangement as defined in any one of the preceding claims, **characterized in that** the arming element (3) is located at the center of the polymer ledge (2) in a thickness direction T.

## Patentansprüche

1. Waschanordnung zum Waschen und Entwässern von Zellulosepülpe, umfassend zumindest ein rotierendes, zylindrisches Element (5), gegen welches die Pülpe entwässert wird, wobei eine Dichtung (1) in einem Enddichtungshalter (4) angeordnet ist, sodass die Dichtung eine Kontaktoberfläche (6) gegen das rotierende zylindrische Element (5) hat, und mit einer Andruckoberfläche (7) die gegen Andruckmittel (8) platziert sind, die in einer Nut (9) im Enddichtungshalter (4) vorhanden sind, wobei die Dichtung eine Längserstreckung aufweist, die der gesamten oder zumindest einem größeren Teil des Umfangs des zylindrischen Elementes entspricht und dazu bestimmt ist, gegen das Ende des zylindrischen Elementes zu dichten, **dadurch gekennzeichnet, dass** die Dichtung eine Polymerleiste (2) ist, die mit einem Armierungselement (3) versehen ist, um so gegen die Zugspannungen, die während des Betriebs in der Dichtung auftreten, zu wirken, das Armierungselement (3) ist ein Stahlband, das mit der Polymerleiste (2) mittels einer Anzahl von Verbindungen (10) verbunden ist, die entlang der Längserstreckung der Dichtung (1) vorgesehen sind.

2. Waschanordnung nach Anspruch 1, **dadurch gekennzeichnet, dass** die Dichtung 1 ein erstes Ende 1a und ein zweites Ende 1b aufweist, wobei das erste Ende 1a in Umfangsrichtung fixiert ist, während das zweite Ende 1b in Umfangsrichtung beweglich ist.

3. Waschanordnung nach Anspruch 2, **dadurch gekennzeichnet, dass** die Dichtung 1 im Wesentlichen einen unterbrochenen Kreis bildet, der weniger als 360° umschließt.

4. Waschanordnung nach einem der voranstehenden Ansprüche, **dadurch gekennzeichnet, dass** das Armierungselement (3) mit der Polymerleiste durch Bolzen oder Schraubenverbindungen (10) verbunden ist.

5. Waschanordnung nach einem der voranstehenden Ansprüche, **dadurch gekennzeichnet, dass** die Erstreckung des Armierungselementes (3) in der Richtung seiner Breite nur einen Teil der gesamtem Erstreckung der Dichtung in der Richtung ihrer Breite ausmacht.

6. Waschanordnung nach einem der voranstehenden Ansprüche, **dadurch gekennzeichnet, dass** das Armierungselement (3) sich von der Andruckoberfläche (7) der Dichtung nach innen, in die Dichtung erstreckt.

7. Waschanordnung nach einem der Ansprüche 1 bis 5, **dadurch gekennzeichnet, dass** das Armierungselement mit seinem Anfang etwas innerhalb der Andruckoberfläche (7) angeordnet ist.

8. Waschanordnung nach einem der voranstehenden Ansprüche, **dadurch gekennzeichnet, dass** die Erstreckung des Armierungselementes (3) in der Richtung der Breite die Hälfte der Breite der Dichtung beträgt.

9. Waschanordnung nach einem der voranstehenden Ansprüche, **dadurch gekennzeichnet, dass** das Armierungselement (3) bezüglich der Richtung einer Dicke T im Zentrum der Polymerleiste (2) angeordnet ist.

## Revendications

1. Dispositif de lavage pour laver et déshydrater la pâte de cellulose, comportant au moins un élément cylindrique rotatif (5), contre lequel la pâte est déshydratée, et dans lequel un joint étanche (1) est placé dans une monture de joint étanche d'extrémité (4), de telle sorte que le joint étanche présente une surface de contact (6) contre l'élément cylindrique rotatif (5) et une surface d'application (7) placée contre des moyens d'application (8) placés dans une gorge (9) dans la monture de joint étanche d'extrémité (4), dans lequel le joint étanche comporte une extension longitudinale, laquelle correspond à la totalité ou au moins à la plus grande partie de la circonférence de l'élément cylindrique et est conçu pour fermer de façon étanche l'extrémité de l'élément cylindrique, **caractérisé en ce que** le joint étanche est une couche de polymère (2) pourvue d'un élément de renforcement (3) de façon à contrecarrer les contraintes de traction se produisant dans le joint étanche en fonctionnement, l'élément de renforcement (3) étant une bande d'acier fixée à la couche de polymère (2) au moyen d'un certain nombre de joints (10) placés le long de l'extension longitudinale du joint étanche (1).

2. Dispositif de lavage selon la revendication 1, **caractérisé en ce que** le joint étanche (1) comporte une première extrémité (1a) et une seconde extrémité (1b), la première extrémité (1a) étant fixe dans la direction circonférentielle tandis que la seconde extrémité (1b) est mobile dans la direction circonférentielle.

3. Dispositif de lavage selon la revendication 2, **caractérisé en ce que** le joint étanche (1) forme essentiellement un cercle interrompu, enfermant moins de 360°.

4. Dispositif de lavage selon l'une quelconque des revendications précédentes, **caractérisé en ce que** l'élément de renforcement (3) est raccordé à la couche de polymère au moyen de broches ou de jonctions par vis (10).

5. Dispositif de lavage selon l'une quelconque des revendications précédentes, **caractérisé en ce que** l'extension de l'élément de renforcement (3) dans la direction de la largeur représente seulement une partie de l'extension totale du joint étanche dans la direction de la largeur.

6. Dispositif de lavage selon l'une quelconque des revendications précédentes, **caractérisé en ce que** l'élément de renforcement (3) s'étend à partir de la surface d'application (7) du joint étanche vers l'intérieur dans le joint étanche.

7. Dispositif de lavage selon les revendications 1 à 5, **caractérisé en ce que** l'élément de renforcement (3) est placé en commençant légèrement vers l'intérieur à partir de la surface d'application (7).

8. Dispositif de lavage selon l'une quelconque des revendications précédentes, **caractérisé en ce que** l'extension de l'élément de renforcement (3) dans l'extension de la largeur représente la moitié de la largeur du joint étanche.

9. Dispositif de lavage selon l'une quelconque des revendications précédentes, **caractérisé en ce que** l'élément de renforcement (3) est placé au centre de la couche de polymère (2) dans la direction de l'épaisseur T.
